## Europäisches Patentamt

## European Patent Office

## Office européen des brevets

(11) Veröffentlichungsnummer: **0 170 792 B1**

(12) **EUROPÄISCHE PATENTSCHRIFT**

(45) Veröffentlichungstag der Patentschrift: **27.12.90**

(21) Anmeldenummer: **85105510.3**

(22) Anmeldetag: **06.05.85**

(51) Int. Cl.⁵: **H 01 G 1/14, H 01 G 4/42, H 01 G 9/08**

(54) Entstörkondensator dessen Anschlusslaschen mit Montierdurchbrüchen versehen sind, wobei ein Durchbruch von einem Isolierelement durchsetzt wird.

(30) Priorität: **11.05.84 DE 3417569**

(43) Veröffentlichungstag der Anmeldung:
**12.02.86 Patentblatt 86/07**

(45) Bekanntmachung des Hinweises auf die
Patenterteilung:
**27.12.90 Patentblatt 90/52**

(84) Benannte Vertragsstaaten:
**FR GB IT SE**

(56) Entgegenhaltungen:
**DE-U-8 312 353**
**GB-A- 818 814**

(73) Patentinhaber: **BERU Ruprecht GmbH & Co. KG**
**Wernerstrasse 35**
**D-7140 Ludwigsburg (DE)**

(72) Erfinder: **Möhle, Karl**
**Bahnhofstrasse 13**
**D-7141 Murr (DE)**
Erfinder: **Bölsch, Jürgen**
**Primelweg 32**
**D-7120 Bietigheim (DE)**
Erfinder: **Müller, Peter**
**Schäferstrasse 45**
**D-7140 Ludwigsburg (DE)**

(74) Vertreter: **WILHELMS, KILIAN & PARTNER**
**Patentanwälte**
**Eduard-Schmid-Strasse 2**
**D-8000 München 90 (DE)**

EP 0 170 792 B1

**Beschreibung**

Die Erfindung betrifft einen Entstörkondensator gemäß dem Oberbegriff des Patentanspruchs 1. Ein derartiger Entstörkondensator ist bekannt (Deutsches Gebrauchsmuster G 83 12 353). Bei dem bekannten Entstörkondensator ist der Zwischenraum zwischen den Anschlußlaschen durch ein mit dem Isolierelement einstückig ausgeführtes Einlegeteil ausgefüllt, wobei die Kühlkörper durch einen Gleichrichterträger aus Isoliermaterial getrennt seitlich nebeneinander liegen. Auf diese Weise ergibt sich eine verhältnismäßig aufwendige seitliche Stapelung bestehend aus Anschlußlasche, Einlegeteil, zweiter Anschlußlasche, Kühlkörper, Isolierteil und weiterem Kühlkörper, wobei die die Wärme erzeugenden Gleichrichter, die gleichzeitig die Störer darstellen, in der Nähe der Kühlkörper liegen und damit verhältnismäßig weit vom Entstörkondensator entfernt angeordnet sind.

Aufgabe der Erfindung ist es daher, den Aufbau so zu gestalten, daß sie von den Gleichrichtungselementen verursachte Störung möglichst nahe am Entstehungsort unterdrückt wird, wobei eine Montage am Wechselstromgenerator mit möglichst wenig zusätzlichen Teilen möglich sein soll.

Diese Aufgabe wird erfindungsgemäß durch einen Entstörkondensator, wie er im Anspruch 1 gekennzeichnet ist gelöst. Hierdurch ergibt sich eine bessere Anpassung an den vorhandenen Einbauplatz am Wechselstromgenerator unter Ausnutzung des zwischen den Anschlußlaschen des Kondensators vorhandenen Platzes.

Vorteilhafte Weiterbildungen der Erfindung sind Gegenstand der Unteransprüche.

Im folgenden wird eine Ausführungsform der Erfindung in Verbindung mit der beigefügten Zeichnung beschrieben. Auf dieser zeigt

Fig. 1 einen Entstörkondensator mit Anschlußlaschen und Isolierelement in Verbindung mit einem einen Kühlkörperaufbau aufweisenden Gleichrichteraufbau in einer Ansicht senkrecht zur Ebene der Anschlußlaschen, und

Fig. 2 den gleichen Entstörkondensatoraufbau in einer zur Ebene der Anschlußlaschen parallelen Ansicht.

Von den Belägen eines von einer Kondensatorumhüllung 4 umgebenen Kondensatorwickels 2 erstrecken sich zwei Anschlußlaschen 6 und 8 weg. Die beiden Anschlußlaschen 6 und 8 weisen koaxiale Durchbrüche 10 und 12 auf, wobei einer der beiden Durchbrüche — 12 — von einem Isolierelement 14 durchsetzt ist, das sich mit einem zylindrischen Teil über die von ihm durchsetzte Anschlußlasche 8 hinaus nach außen erstreckt und auf der der anderen Anschlußlasche 6 zugekehrten Seite einen Flansch 16 aufweist, der verhindert, daß das Isolierelement 14 nach außen durch den von ihm durchsetzten Durchbruch 12 aus der Anschlußlasche 8 gedrückt werden kann. Im Bereich zwischen den Anschlußlaschen 6 und 8 liegt das Ende eines mit Kühlrippen ausgebildeten Kühlkörpers 24, der den positiven Polzuleiter zur Schaltung darstellt. Der Kühlkörper 24 weist eine den Durchbrüchen 10 und 12 entsprechende Bohrung oder, vorzugsweise, auch einen in seiner Weite den Durchbrüchen entsprechenden maulförmigen Schlitz auf derart, daß die beiden Anschlußlaschen 6 und 8 zusammen mit dem Kühlkörper 24 und dem Isolierelement 14 von einer Schraube 26 aus Metall durchsetzt werden können.

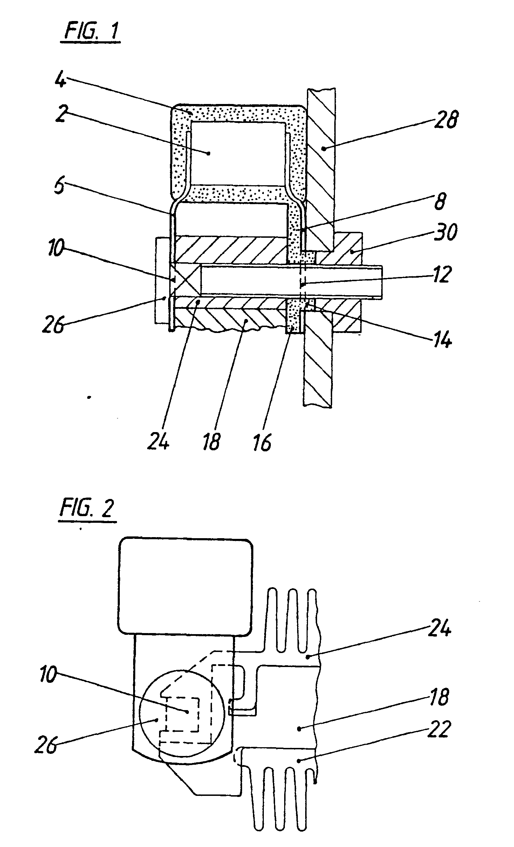

Wie es am besten aus Fig. 1 ersichtlich ist, steht die Schraube 26 kopfseitig mit der einen Anschlußlasche — 6 — in elektrisch leitender Verbindung, während bei der anderen Anschlußlasche — 8 — das Isolierelement 14 dafür sorgt, daß eine solche elektrisch leitende Verbindung zwischen Schraube 26 und dieser Anschlußlasche 8 nicht gegeben ist. Auf diese Weise wird verhindert, daß durch die Schraube 26 die beiden Anschlußlaschen 6 und 8 und damit auch die Ausgangsanschlüsse des vorhandenen (nicht gezeigten) Gleichrichters, also im allgemeinen Dioden, kurzgeschlossen werden.

Das Isolierelement 14 ist vorzugsweise auf die Anschlußlasche 8 in der dargestellten Form aufgespritzt, kann aber auch ein gesondertes Teil sein.

Wie am besten aus Fig. 2 ersichtlich ist der metallische Kühlkörper 24 so geführt, daß er sich bis in den Bereich zwischen den Anschlußlaschen 6 und 8 erstreckt, während dies bei einem weiteren Kühlkörper 22 nicht der Fall ist. Der in den Bereich der Anschlußlaschen gezogene Kühlkörper 24 hat somit elektrischen Kontakt mit der schraubenkopfseitigen Anschlußlasche 6 und der Schraube 26. Mit diesem Kühlkörper 24 können auch die generatorabseitigen Pole der — im Falle eines Drehstromgenerators drei — Gleichrichterdioden verbunden sein, wobei dieser Kühlkörper dann mit dem Spannungsanschluß der Fahrzeugelektrik verbunden ist. Die Verbindung zum Spannungsanschluß der Fahrzeugelektrik erfolgt durch die Schraube.

Der andere Kühlkörper 22 steht mit den Gleichrichterdioden auch in wärmeleitender und elektrischer Verbindung.

Die notwendige räumliche Nähe zwischen den Gleichrichterdioden und den Kühlkörpern 22 und 24 wird dadurch erreicht, daß die Dioden in einem mit den Kühlkörpern 22 und 24 verbundenen Gleichrichterträger 18 zwischen den Kühlkörpern 22 und 24 angebracht sind. Der Aufbau aus Entstörkondensator mit seinen Anschlußlaschen 6 und 8, dem Gleichrichterträger 18 und den Kühlkörpern 22 und 24 wird zweckmäßigerweise innen auf dem Lagerschild 28 des Wechselstromgenerators (Drehstromgenerators) montiert. Hierzu ist im Lagerschild eine Durchgangsbohrung vorgesehen, die dem Außendurchmesser des zylindrischen Teils des Isolierelementes entspricht, der so lang ist, daß er sich in diese Bohrung erstreckt. Auf diese Weise wird die Schraube 26 ohne Berührung mit dem Lagerschild durch die Bohrung geführt und kann von der anderen Seite mit Hilfe einer Kunststoffmutter 30, die zur Isolierung und Zentrierung ebenfalls einen zylindrischen Ansatz haben kann, angezogen werden. Auf diese Weise wird die von dem Isolierelement 14 durchsetzte Anschlußlasche 8 gegen den Lagerschild gedrückt, so daß sie Masseverbindung erhält.

Die gute Anbringbarkeit des Kondensator wird auch noch dadurch begünstigt, daß die Kondensatorumhüllung im wesentlichen auf den Bereich zwischen den Ebenen der Anschlußlaschen beschränkt.

**Patentansprüche**

1. Entstörkondensator in Kombination mit einem einen Kühlkörperaufbau aufweisenden Gleichrichteraufbau, wobei die Kondensatoranschlüsse im Abstand voneinander liegende Anschlußlaschen (6, 8) aufweisen, die mit von einem Befestigungsteil zu durchsetzenden Durchbrüchen (10, 12) versehen sind, wobei der Durchbruch (12) einer der Anschlußlaschen (8) von einem das Befestigungsteil von dieser Anschlußlasche isolierenden Isolierelement (14) durchsetzt wird, dadurch gekennzeichnet, daß sich der Kühlkörperaufbau (18, 22, 24) im wesentlichen zwischen den Ebenen der Anschlußlaschen (6, 8) erstreckt, und daß sich das Isolierelement (14) zwischen den Ebenen der Anschlußlaschen (6, 8) auf einen Bereich zwischen dem Kühlkörperaufbau (18, 22, 24) und der Anschlußlasche (8), die es durchsetzt, beschränkt.

2. Entstörkondensator nach Anspruch 1, dadurch gekennzeichnet, daß das Isolierelement (14) an die von ihm durchsetzte Anschlußlasche (8) angespritzt ist.

3. Entstörkondensator nach Anspruch 2 in Kombination mit einem Fahrzeug-Wechselstromgenerator, dadurch gekennzeichnet, daß die von dem Isolierelement (14) durchsetzte Anschlußlasche (8) an einer Befestigungsplatte des Wechselstromgenerators, welche eine Durchgangsbohrung aufweist, liegt, daß sich das Isolierelement in die Durchgangsbohrung hinein erstreckt und daß als Befestigungsteil eine Schraube (26) vorgesehen ist, welche mit ihrem Kopf an der anderen Anschlußlasche (6) anliegt und mittels einer nicht leitenden Mutter (30) den Kühlkörperaufbau (18, 22, 24) zwischen den Anschlußlaschen (6, 8) festlegend gegen die Befestigungsplatte (28) gezogen ist.

4. Entstörkondensator nach Anspruch 3, dadurch gekennzeichnet, daß der Gleichrichteraufbau vier oder sechs Dioden enthält, welche in bzw. auf einem Gleichrichterträger (18) des Kühlkörperbaus (18, 22, 24) angeordnet sind.

5. Entstörkondensator nach Anspruch 3, dadurch gekennzeichnet, daß der Gleichrichteraufbau eine Mittelpunktschaltung mit zwei oder drei Dioden bildet.

**Revendications**

1. Condensateur de déparasitage en combinaison avec une structure de redresseur présentant une structure de corps de refroidisseur, les bornes de condensateur présentant des pattes de borne (6, 8) disposées à distance l'une de l'autre, qui comportent des orifices (10, 12) qui doivent être traversés par une pièce de fixation, l'orifice (12) de l'une des pattes de borne (8) étant traversé par un élément isolant (14) isolant de cette patte de borne la pièce de fixation, caractérisé en ce que la structure de refroidisseur (18, 22, 24) s'étend sensiblement entre les plans des pattes de borne (6, 8) et en ce que l'élément isolant (14) se limite entre les plans des pattes de borne (6, 8) à une zone comprise entre la structure de refroidisseur (18, 22, 24) et la patte de borne (8) qu'il traverse.

2. Condensateur de déparasitage selon la revendication 1, caractérisé en ce que l'élément isolant (14) est injecté sur la patte de borne (8) qu'il traverse.

3. Condensateur de déparasitage selon la revendication 2, en combinaison avec un générateur de courant alternatif de véhicule, caractérisé en ce que la patte de borne (8) traversée par l'élément isolant (14) repose sur une plaque de fixation du générateur de courant alternatif, laquelle présente un alésage traversant, en ce que l'élément isolant s'étend à travers l'alésage traversant et en ce qu'il est prévu comme pièce de fixation une vis (26), qui repose par sa tête sur l'autre patte de borne (6) et est tirée à l'encontre de la plaque de fixation (28) au moyen d'un écrou non conducteur (30), en fixant la structure de refroidisseur (18, 22, 24) entre les pattes de bornes (6, 8).

4. Condensateur de déparasitage selon la revendication 3, caractérisé en ce que la structure de redresseur comprend quatre ou six diodes, qui sont disposées par exemple sur un support de redresseur (18) de la structure de refroidisseur (18, 22, 24).

5. Condensateur de déparasitage selon la revendication 3, caractérisé en ce que la structure de redresseur constitue un circuit de point central entre deux ou trois diodes.

**Claims**

1. A suppressor capacitor in combination with a rectifier construction comprising a cooling body structure, the capacitor connections having spaced apart connection tabs (6, 8) provided with apertures (10, 12) intended to be traversed by a fixing part, the aperture (12) in one of the connection tabs (8) being traversed by an insulating element (14) which insulates the fixing part from the said connection tab, characterised in that the cooling body structure (18, 22, 24) extends substantially between the plane of the connection tabs (6, 8) and in that the insulating element (14) between the planes of the connection tabs (6, 8) is confined to an area between the cooling body structure (18, 22, 24) and the connection tab (8) through which it passes.

2. A suppressor capacitor according to claim 1, characterised in that the insulating element (14) is integrally moulded onto the connection tab (8) which is traversed by it.

3. A suppressor capacitor according to claim 2 in combination with an alternating current generator of a vehicle, characterised in that the connection tab (8) traversed by the insulating element (14) is on a fixing plate of the alternating current generator which comprises a through-bore and in that the insulating element extends into the through-bore and in that as a fixing part a screw (26) is provided the head of which bears on the other connection tab (6) and is tightened by means of a non-conductive nut (30) which fixes the cooling body structure (18, 22, 24) between the connection tabs (6, 8) and against the fixing plate (28).

4. A suppressor capacitor according to claim 3, characterised in that the rectifier structure contains four or six diodes which are disposed in or on a rectifier carrier (18) of the cooling body structure (18, 22, 24).

5. A suppressor capacitor according to claim 3, characterised in that the rectifier structure forms a centre point circuit with two or three diodes.

FIG. 1

FIG. 2